# EUROPEAN PATENT APPLICATION

(11) **EP 2 239 678 A1**
(43) Date of publication of application: **13.10.2010**
(21) Application number: 10250233.3
(22) Date of filing: 11.02.2010
(51) Int. Cl.: G06F 21/00

(54) **Authentication device, authentication method, and program**

(30) Priority: 10.04.2009 JP 2009096196
(71) Applicant: Sony Corporation, Tokyo 108-0075 (JP)
(72) Inventor: Kusakawa, Masafumi, Tokyo (JP); Miyato, Yoshikazu, Tokyo (JP)
(74) Representative: Robinson, Nigel Alexander Julian

(57) **Abstract**

Provided is an authentication device which includes a register in which a first-bit or a second-bit different from the first-bit is stored, m first determination units for determining whether input information and authentication information match, and for storing the first-bit in the register if a result of the determination is TRUE and for storing the second-bit in the register if FALSE, (N-m) second determination units for determining whether input information and authentication information do not match, and for storing the first-bit in the register if a result of the determination is TRUE and for storing the second-bit in the register if FALSE, and an authentication determination unit for determining that an authentication is established, in case the first-bit is stored in the register by a determination process by every first determination unit and the second-bit is stored in the register by a determination process by every second determination unit.

## Description

The present invention relates to an authentication device, an authentication method, and a program.

In recent years, along with the spread of use of a network environment, not only a general-purpose electronic device such as a personal computer (hereinafter, "PC"), but also electronic devices with a special function, such as a television, a recording/reproducing device, and a portable audio device, are becoming capable of connecting to a network. Under this circumstance, the ensuring of security, such as protection of a user's personal information, or measures against computer viruses or malware, is becoming more important for various types of electronic devices. Therefore, various types of electronic devices are desired to implement an authentication function for checking the authenticity of a communication counterpart. Particularly, a semiconductor integrated circuit (hereinafter, "IC") playing an important role within an electronic device is desired to realize an authentication function for checking the authenticity of software or firmware (hereinafter, "program") that is input from outside.

Such authentication function is in many cases realized by using an encryption technology. As an authentication function using an encryption technology, there exist authentication for checking whether a communication counterpart holds a valid key, a digital signature for checking whether a program or the like is valid, a message authentication code (MAC), and the like. According to the authentication, a random number is transmitted to a counterpart to be authenticated and the counterpart is asked to generate a ciphertext, and whether the key of the counterpart is valid or not is decided by determining whether the result of decryption of the ciphertext returned from the counterpart matches the random number that has been transmitted. Also, according to the digital signature and MAC, data falsification, the authenticity of a key creator, or the like, is checked based on whether a result of data operation using a key matches an expected value. For example, Japan Patent No. 3749640 discloses a technology relating to such authentication function.

Logically, as long as such safe encryption algorithm is used, an unauthorized communication counterpart is not falsely recognized as an authorized communication counterpart, or an unauthorized program is not executed. However, when there is a flaw in the implementation method of a program for performing authentication, an attacker who does not have a key can impersonate an authorized communication counterpart, or can have an unauthorized program executed.

For example, in view of verification and readability, a program for performing the authentication is implemented in such a way that a conditional branch portion for authentication establishment/non-establishment is "established if the conditional expression is TRUE; not established if the conditional expression is FALSE." Accordingly, when the program is executed, a microprocessor (MPU; Micro Processing Unit) inside an IC sets the value of a specific bit of a flags register to 1 or 0 according to the TRUE or FALSE of the conditional expression. For example, the value of the specific bit of the flags register is set to 1 when the conditional expression is TRUE, and is set to 0 when the conditional expression is FALSE.

Thus, the program reads the value of a specific bit of the flags register, and performs an authentication establishment process in case of 1 and an authentication non-establishment process in case of 0. Accordingly, in case of establishment of authentication, the value of a specific bit of the flags register is invariably 1. However, if the program is implemented in this way, the value of a specific bit of the flags register of the MPU will be fixated to 1 in case the output line for the flags register value is shorted to a power supply or the ground (GND) by using a focus ion beam (FIB). Similarly, an attack such as fixation of a value of the flags register by laser irradiation will fixate the value of a specific bit of the flags register of the MPU to 1. As a result, the MPU is made by the attacker to perform the process of authentication establishment.

Thus, in light of the foregoing, it is desirable to provide an authentication device, an authentication method, and a program which are new and improved, and which can resist unauthorized performing of an authentication process even if the value of a specific bit of a register of an MPU or the like is fixated.

Further particular and preferred aspects of the present invention are set out in the accompanying independent and dependent claims. Features of the dependent claims may be combined with features of the independent claims as appropriate, and in combinations other than those explicitly set out in the claims.

According to an embodiment of the present invention, there is provided an authentication device including a register in which a first bit value or a second bit value different from the first bit value is stored, m (1≤m≤N-1, N≥2) first determination processing units for determining whether input information and authentication information corresponding to the input information match, and for storing the first bit value in the register if a result of the determination is TRUE and for storing the second bit value in the register if FALSE, (N-m) second determination processing units for determining whether input information and authentication information corresponding to the input information do not match, and for storing the first bit value in the register if a result of the determination is TRUE and for storing the second bit value in the register if FALSE, and an authentication determination unit for determining that an authentication is established, in case the first bit value is stored in the register by a determination process by every first determination processing unit and the second bit value is stored in the register by a determination process by every second determination processing unit.

Furthermore, the authentication device may include a processing circuit for storing in the register, in case an execution command for a determination process and input data relating to the execution command are input, the first bit value if a result of executing the execution command by using the input data is TRUE and the second bit value if FALSE. In this case, the first determination processing units store the first or the second bit value in the register by inputting to the processing circuit an execution command for a match determination process for two pieces of input data along with inputting, as the input data, the input information and authentication information corresponding to the input information. Also, the second determination processing units store the first or the second bit value in the register by inputting to the processing circuit an execution command for a non-match determination process for two pieces of input data along with inputting, as the input data, the input information and authentication information corresponding to the input information.

Furthermore, the authentication device may further include a storage unit in which first authentication information to be used for authenticating a first program for building an execution environment for an application program and second authentication information to be used for authenticating the application program are stored. In this case, the first determination processing units determine whether information for authentication obtained as the input information from the first program which is an execution target and the first authentication information stored in the storage unit match, and store the first or the second bit value in the register. Also, the second determination processing units determine whether information for authentication obtained as the input information from the second program which is an execution target and the second authentication information stored in the storage unit do not match, and store the first or the second bit value in the register.

Furthermore, the authentication device may further include a storage unit in which first authentication information to be used for authenticating a first program for building an execution environment for an application program and second authentication information to be used for authenticating the application program are stored. In this case, the second determination processing units determine whether information for authentication obtained as the input information from the first program which is an execution target and the first authentication information stored in the storage unit do not match, and store the first or the second bit value in the register. Also, the first determination processing units determine whether information for authentication obtained as the input information from the second program which is an execution target and the second authentication information stored in the storage unit match, and store the first or the second bit value in the register.

Furthermore, the authentication device may further include a storage unit in which first authentication information to be used for an authentication process between the authentication device and an external device and second authentication information to be used for user authentication via the external device are stored. In this case, the first determination processing units determine whether input information input from the external device and the first authentication information stored in the storage unit match, and store the first or the second bit value in the register. Also, the second determination processing units determine whether input information input by a user via the external device and the second authentication information stored in the storage unit do not match, and store the first or the second bit value in the register.

Furthermore, the authentication device may further include a storage unit in which first authentication information to be used for an authentication process between the authentication device and an external device and second authentication information to be used for user authentication via the external device are stored. In this case, the first determination processing units determine whether input information input by a user via the external device and the second authentication information stored in the storage unit match, and store the first or the second bit value in the register. Also, the second determination processing units determine whether input information input from the external device and the first authentication information stored in the storage unit do not match, and store the first or the second bit value in the register.

According to another embodiment of the present invention, there is provided an authentication method including the steps of determining whether input information and authentication information corresponding to the input information match, and executing m times (1≤m≤N-1, N≥2) a first determination processing step of storing, in a register in which a first bit value or a second bit value different from the first bit value is to be stored, the first bit value if a result of the determination is TRUE and storing in the register the second bit value if FALSE, determining whether input information and authentication information corresponding to the input information do not match, and executing (N-m) times a second determination processing step of storing in the register the first bit value if a result of the determination is TRUE and storing in the register the second bit value if FALSE, and determining that an authentication is established, in case the first bit value is stored in the register by a determination process of every first determination processing step and the second bit value is stored in the register by a determination process of every second determination processing step.

According to another embodiment of the present invention, there is provided a program for causing a computer to realize the steps of determining whether input information and authentication information corresponding to the input information match, and executing m times (1≤m≤N-1, N≥2) a first determination processing step of storing, in a register in which a first bit value or a second bit value different from the first bit value is to be stored, the first bit value if a result of the determination is TRUE and storing in the register the second bit value if FALSE, determining whether input information and authentication information corresponding to the input information do not match, and executing (N-m) times a second determination processing step of storing in the register the first bit value if a result of the determination is TRUE and storing in the register the second bit value if FALSE, and determining that an authentication is established, in case the first bit value is stored in the register by a determination process of every first determination processing step and the second bit value is stored in the register by a determination process of every second determination processing step.

According to another embodiment of the present invention, there is provided a recording medium in which the program is recorded, the recording medium being able to be read by a computer.

According to the embodiments of the present invention described above, an unauthorized authentication process can be prevented from being performed even if the value of a specific bit of a register of an MPU or the like is fixated.

Embodiments of the invention will now be described, by way of example, with reference to the accompanying drawings in which:
FIG. 1 is an explanatory diagram showing a configuration example of an authentication processing system according to an example embodiment of the present invention;
FIG. 2 is an explanatory diagram showing an example of an authentication method according to the present example embodiment;
FIG. 3 is an explanatory diagram showing a configuration example of an IC card user terminal according to the present example embodiment;
FIG. 4 is an explanatory diagram showing a configuration example of an IC card according to the present example embodiment;
FIG. 5 is an explanatory diagram showing a flow of processes by the IC card according to the present example embodiment;
FIG. 6A is an explanatory diagram showing a part of an operation to be executed by the IC card according to the present example embodiment;
FIG. 6B is an explanatory diagram showing a part of an operation to be executed by the IC card according to the present example embodiment;
FIG. 7 is an explanatory diagram showing a more concrete flow of processes by the IC card according to the present example embodiment;
FIG. 8 is an explanatory diagram for comparing the authentication method according to the present example embodiment and a general authentication method;
FIG. 9 is an explanatory diagram showing an example of tampering which may be executed in case of using a general authentication method; and
FIG. 10 is an explanatory diagram showing an example of tampering which may be executed in case of using a general authentication method.

Hereinafter, preferred example embodiments of the present invention will be described in detail with reference to the appended drawings. Note that, in this specification and the appended drawings, structural elements that have substantially the same function and structure are denoted with the same reference numerals, and repeated explanation of these structural elements is omitted. Moreover, explanation will be made in the order shown below.

### <Flow of Explanation>

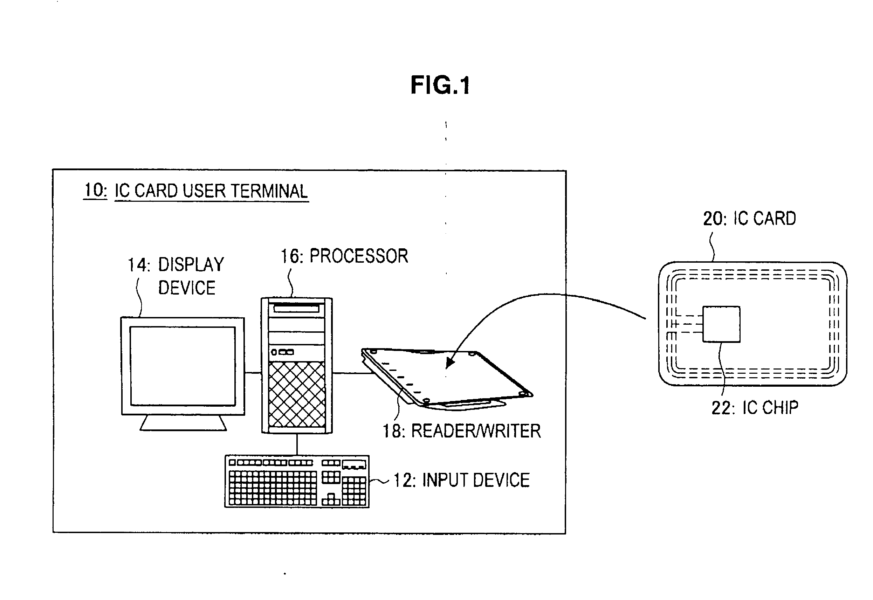

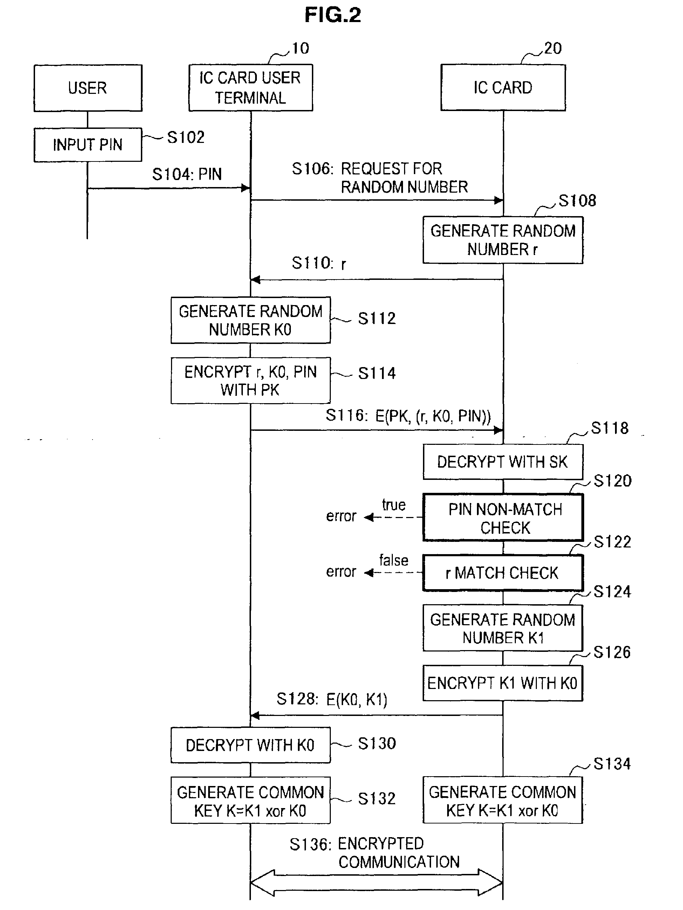

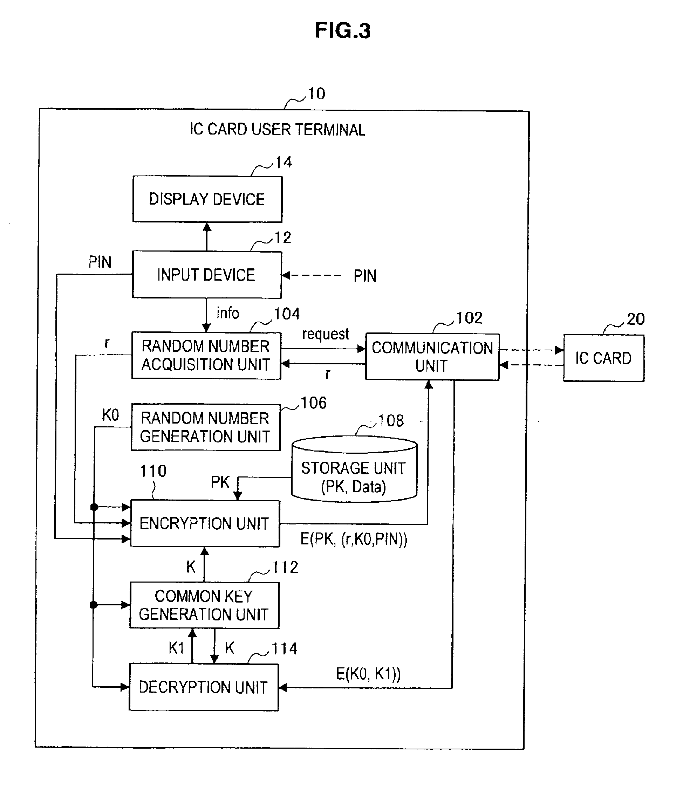

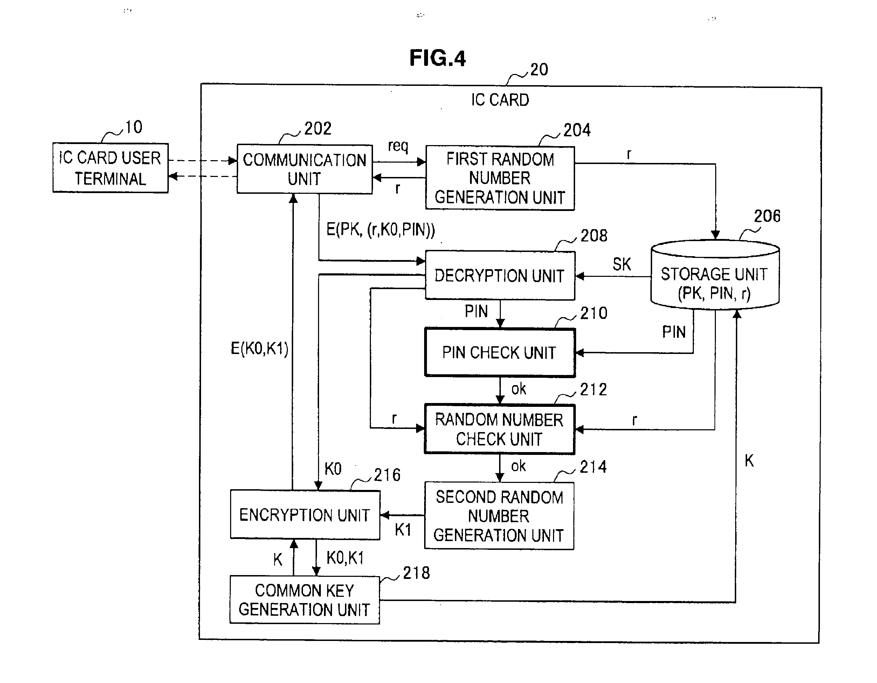

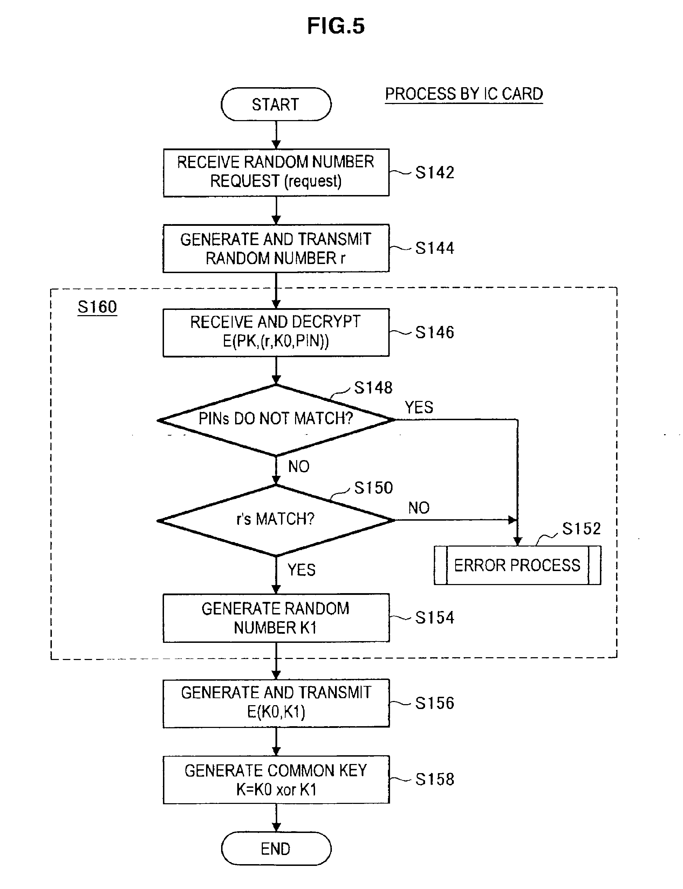

Here, a flow of explanation of an embodiment of the present invention to be described below will be briefly stated. First, with reference to FIG. 1, a configuration example of an authentication processing system according to an embodiment of the present invention will be described. Next, referring to FIG. 2, a flow of an authentication process according to the present embodiment will be described. Then, referring to FIG. 3, a functional configuration of an IC card user terminal 10 according to the present embodiment will be described. Then, referring to FIG. 4, a functional configuration of an IC card 20 according to the present embodiment will be described. Then, referring to FIG. 5, a flow of processes by the IC card 20 according to the present embodiment will be described.

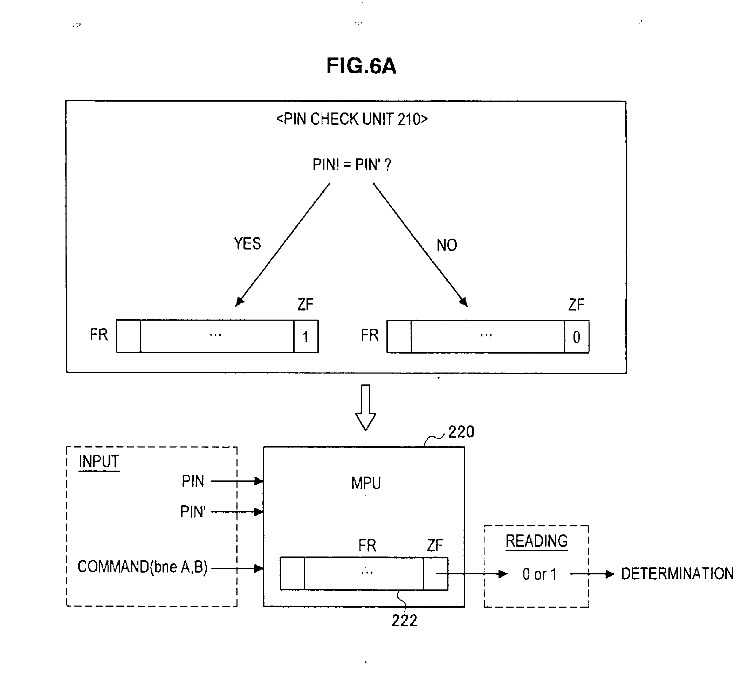

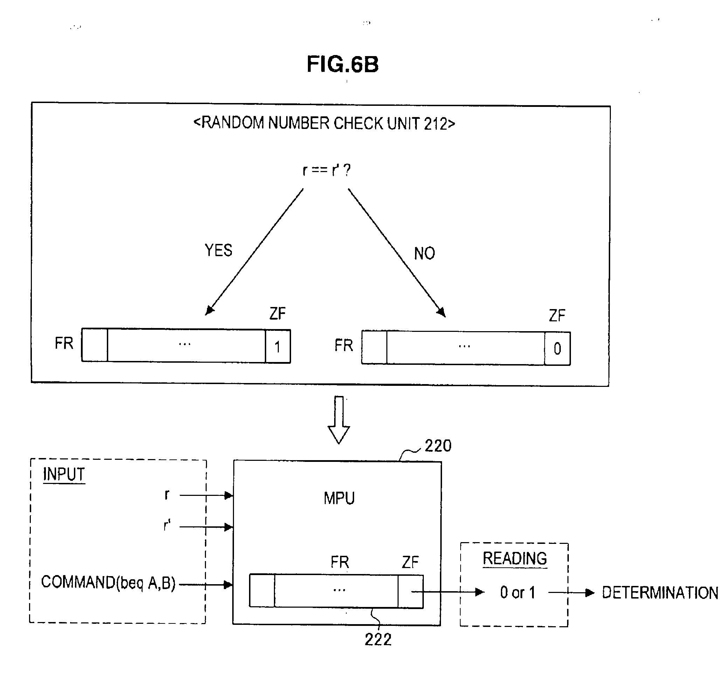

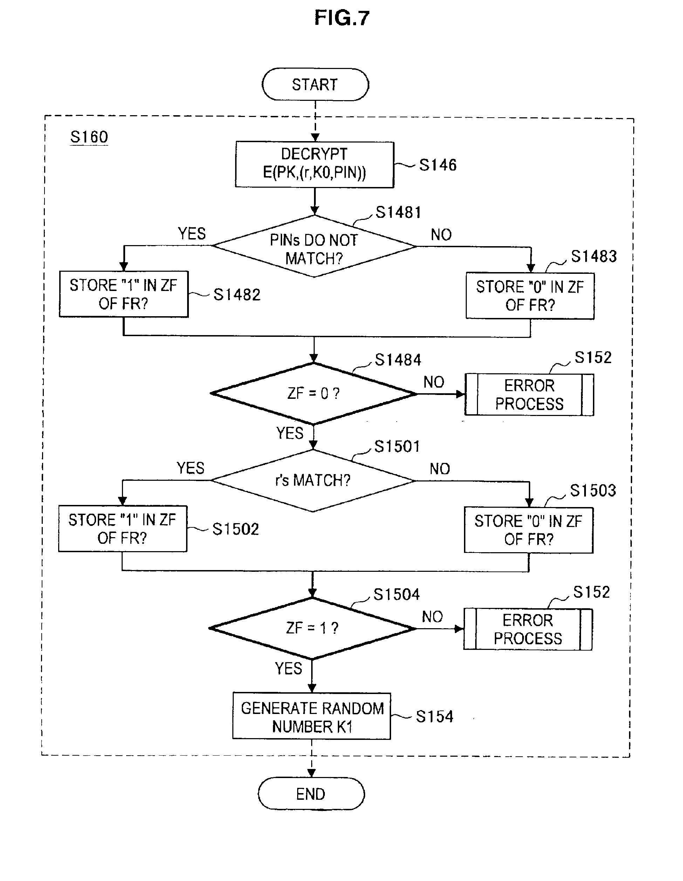

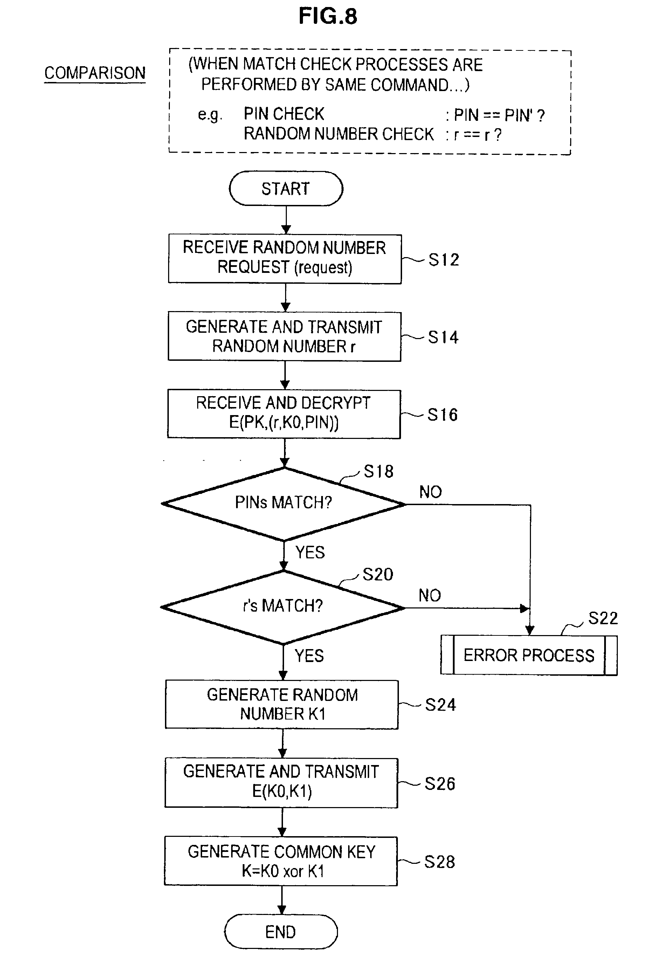

Next, referring to FIGS. 6A and 6B, partial operations of the IC card 20 according to the present embodiment will be described in greater detail. Then, referring to FIG. 7, a more concrete flow of processes will be described in relation to a part of the processes by the IC card 20 according to the present embodiment. Then, referring to FIGS. 8 to 10, a difference between an authentication method according to the present embodiment and an authentication method in general will be described, and effects obtained by the application of the authentication method according to the present embodiment will be described. Lastly, a technical idea of the present embodiment and effects obtained from the technical idea will be briefly described.

### (Explanation Items)

1: Embodiment
   - 1-1:: Configuration of Authentication Processing System
   - 1-2:: Overall Flow of Authentication Method
   - 1-3:: Functional Configuration of IC Card User Terminal 10
   - 1-4:: Functional Configuration of IC Card 20
   - 1-5:: Comparison with Authentication Method in General
2: Conclusion

### <1: Embodiment>

An embodiment of the present invention will be described. The present embodiment relates to an implementation method of a program for performing various types of authentication processes, such as mutual authentication and message authentication, which operates in a semiconductor integrated circuit (IC). Also, the present embodiment relates to an authentication establishment/non-establishment deciding portion in the program for performing the authentication, and has its feature in that the program is implemented such that a portion for performing an authentication establishment process in case the conditional expression is TRUE and a portion for performing an authentication non-establishment process in case the conditional expression is FALSE are present in mixed manner. This feature enables to prevent falsification of an authentication result by a fixation attack on the authentication result using an analysis technology such as an FIB, a laser irradiation or the like. Additionally, the technology of the present embodiment is applied to a case of implementing an authentication performing program for performing the authentication establishment/non-establishment decision several times.

### (1-1: Configuration of Authentication Processing System)

First, with reference to FIG. 1, a configuration example of an authentication processing system according to the present embodiment will be described. FIG. 1 is an explanatory diagram showing a configuration example of the authentication processing system according to the present embodiment. The system configuration shown in FIG. 1 is only an example, and the application range of the technology according to the present embodiment is not limited to such. For example, in the present embodiment, an authentication process by a non-contact IC card is used as an example for the sake of explanation. However, it should be noted that various electronic devices equipped with an IC, a contact-type IC card and the like are also within the technical range of the present embodiment.

As shown in FIG. 1, the authentication processing system is configured mainly from the IC card user terminal 10 and the IC card 20. Additionally, the IC card 20 is an example of an authentication device. The IC card user terminal 10 is a terminal, for reading and writing IC information, connected to a PC or the like or installed at a ticket gate of public transportation, a retail store, a bank counter or the like. The IC card user terminal 10 is configured mainly from an input device 12, a display device 14, a processor 16, and a reader/writer 18. However, these structural elements may be partly omitted according to the mode of an embodiment.

The input device 12 is an input means with which an IC card user inputs personal information, authentication information (PIN; Personal Identification Number) or the like. Furthermore, the display device 14 is a display means used for displaying the personal information input by the IC card user or for prompting input of the authentication information. The processor 16 is means for controlling display by the display device 14 or the operation of the reader/writer 18. Also, the processor 16 can hold the personal information and the authentication information of the IC card user input by using the input device 12, or various types of information acquired via the reader/writer 18. Furthermore, the processor 16 is means for performing various operational processes in an authentication process.

Furthermore, the reader/writer 18 is means for reading information in an IC - chip 22 mounted on the IC card 20 or for writing information in the IC chip 22, by communicating with the IC card 20. Additionally, the communication between the reader/writer 18 and the IC card 20 may be non-contact communication or contact communication. As described above, the IC chip 22 is provided in the IC card 20. Furthermore, in case of non-contact communication, a loop antenna is arranged within the IC card 20, and an end of the loop antenna is connected to the IC chip 22. Thus, communication is realized between the IC card 20 and the IC card user terminal 10 by using power modulation induced by the loop antenna due to a change in a magnetic field caused by the reader/writer 18.

The configuration shown in FIG. 1 is only an example, but, for the sake of explanation, the following explanation will be made with the system configuration of FIG. 1 in mind. Of course, the application range of the technology according to the present embodiment is not limited to such.

### (1-2: Overall Flow of Authentication Method)

Next, with reference to FIG. 2, an overall flow of the authentication method of the authentication processing system of the present embodiment will be described. FIG. 2 is an explanatory diagram showing the overall flow of the authentication method of the authentication processing system of the present embodiment. However, the authentication method shown in FIG. 2 is only an example, and the application range of the technology according to the present embodiment is not limited to such. For example, the present embodiment can be applied to any authentication method which includes several times of determination processes. Accordingly, it should be kept in mind that FIG. 2 is only an example selected from authentication methods which include several times of determination processes.

First, a user inputs a PIN to the IC card user terminal 10 by using the input device 12 (S102, S104). Additionally, the information on the PIN to be input by the user at this time is held in the IC card 20. Next, the IC card user terminal 10 issues a random number request and transmits the same to the IC card 20 (S106). The random number request is for acquiring a random number generated by the IC card 20. When the random number request is received from the IC card user terminal 10, the IC card 20 generates a random number (r) (S108). Next, the IC card 20 transmits the generated random number r to the IC card user terminal 10 (S110).

When the random number r is received from the IC card 20, the IC card user terminal 10 generates a random number (K0) (S 112). Then, the random number r acquired from the IC card 20, the random number K0 generated in step S 112, and the PIN input by the user are encrypted by using a public key PK issued by the IC card 20 (S114). A ciphertext E (PK, (r, K0, PIN)) is generated by this encryption process. Additionally, when expressed as E(A, B), E(A, B) indicates a ciphertext acquired by encrypting B with an encryption key A. Also, E(PK, (r, K0, PIN)) indicates a ciphertext in which r, K0 and PIN are respectively encrypted in a format that can be decrypted by a secret key SK corresponding to the public key PK

When the ciphertext E(PK, (r, K0, PIN) is generated, the IC card user terminal 10 transmits the ciphertext E(PK, (r, K0, PIN) to the IC card 20 (S116). When the ciphertext E(PK, (r, K0, PIN) is received from the IC card user terminal 10, the IC card 20 decrypts r, K0 and PIN by using the secret key SK corresponding to the public key PK (S 118). Then, the IC card 20 checks whether the decrypted PIN and the PIN that is held by itself do not match (S 120). At this time, it is determined to be TRUE by the IC card 20 in case the PINs do not match. In case the PINs do not match, the IC card 20 performs an error process and ends the series of authentication processes.

In case the PINs do match, the IC card 20 checks whether the random number r which has been decrypted in step S 118 and the random number r that the IC card 20 itself generated in step S108 match (S122). At this time, it is determined to be TRUE by the IC card 20 in case the random numbers r's match. In case the random numbers r's do not match, the IC card 20 performs an error process and ends the series of authentication processes. On the other hand, in case the random numbers r's do match, the IC card 20 generates a random number (K1) (S124). Next, the IC card 20 encrypts the random number K1 by using the random number K0 which has been decrypted in step S118 (S126). A ciphertext E(K0, K1) is generated by this encryption process. Then, the IC card 20 transmits the generated ciphertext E(K0, K1) to the IC card user terminal 10 (S128).

When the ciphertext E(K0, K1) is received from the IC card 20, the IC card user terminal 10 decrypts the random number K1 included in the ciphertext E(K0, K1) with the random number K0 generated in step S112 as the key (S130). Then, the IC card user terminal 10 generates a common key K=K1 xor K0 by using the random numbers K0 and K1 (S132). The "xor" means the exclusive or operation. In a similar manner, the IC card 20 generates the common key K=K1 xor K0 by using the random numbers K0 and K1 (S134). Then, the IC card user terminal 10 and the IC card 20 perform encrypted communication by using the common key K (S136).

As described above, the authentication method shown in FIG. 2 includes two determination processes (steps S120, S122) by the IC card 20. In the present embodiment, the determination process of step S 120 is a non-match check and the determination process of step S122 is a match check. Thus, authentication is established when the determination process in step S120 indicates "FALSE" and the determination process in step S122 indicates "TRUE." As described, the main technical feature of the present embodiment is that truth values for determining authentication establishment/non-establishment are different for each of the determination processes. Hereunder, the technology will be described in more detail with the process shown in FIG. 2 as an example.

### (1-3: Functional Configuration of IC Card User Terminal 10)

First, with reference to FIG. 3, the functional configuration of the IC card user terminal 10 according to the present embodiment will be described. FIG. 3 is an explanatory diagram showing a functional configuration example of the IC card user terminal 10 according to the present embodiment. Additionally, the functional configuration example shown in FIG. 3 is for performing the authentication process of FIG. 2, and is appropriately changed depending on the type or the like of the authentication process method to be performed.

As shown in FIG. 3, the IC card user terminal 10 mainly includes the input device 12, the display device 14, a communication unit 102, a random number acquisition unit 104, a random number generation unit 106, a storage unit 108, an encryption unit 110, a common key generation unit 112, and a decryption unit 114. Furthermore, the functions of the random number acquisition unit 104, the random number generation unit 106, the storage unit 108, the encryption unit 110, the common key generation unit 112 and the decryption unit 114 are realized by the processor 16. Also, the function of the communication unit 102 is realized by the reader/writer 18.

First, when a user inputs a PIN by using the input device 12, the PIN is input to the encryption unit 110 from the input device 12. At this time, confirmation information on the input PIN may be displayed on the display device 14. Also, notification information (info) indicating that a PIN is input is input from the input device 12 to the random number acquisition number 104. When this notification information is received, the random number acquisition unit 104 issues a random number request (request) and transmits the same to the IC card 20 via the communication unit 102. When a random number r is transmitted from the IC card 20 upon the reception of the random number request, the random number r is input to the random number acquisition unit 104 via the communication unit 102.

When the random number r is acquired from the IC card 20 in this manner, the random number acquisition unit 104 inputs the acquired random number r to the encryption unit 110. A random number K0 generated by the random number generation unit 106 is also input to the encryption unit 110. The random number generation unit 106 generates the random number K0, and inputs the random number K0 to, in addition to the encryption unit 110, the common key generation unit 112 and the decryption unit 114. Furthermore, the encryption unit 110 acquires the public key PK of the IC card 20 stored in the storage unit 108, and encrypts with the public key PK the PIN, the r and the K0 that are input. A ciphertext E(PK, (r, K0, PIN)) is generated by this encryption process.

The ciphertext E(PK, (r, K0, PIN)) generated by the encryption unit 110 is transmitted to the IC card 20 via the communication unit 102. Authentication processes for the PIN and the random number r are performed by the IC card 20 upon reception of the ciphertext E(PK, (r, K0, PIN)), and when the authentications succeed, a ciphertext E(K0, K1) which has been obtained by encrypting a random number K1 by using the random number K0 is transmitted from the IC card 20. The ciphertext E(K0, K1) received by the communication unit 102 is input to the decryption unit 114 from the communication unit 102. When the ciphertext E(K0, K1) is input, the decryption unit 114 decrypts the random number K1 included in the ciphertext E(K0, K1) by using the random number K0 input from the random number generation unit 106. Then, the random number K1 decrypted by the decryption unit 114 is input to the common key generation unit 112.

When the random number K1 is input from the decryption unit 114, the common key generation unit 112 generates a common key K=K0 xor K1 by using the random number K0 generated by the random number generation unit 106 and the random number K1 input from the decryption unit 114. Additionally, it is sufficient that the common key K generated by the common key generation unit 112 is generated based on the random numbers K0 and K1. Thus, an arithmetic expression used for the generation of the common key K is not necessarily limited to the exclusive or operation described above. However, for the sake of explanation, it is to be understood that the common key is generated by the arithmetic expression described above. The common key K generated by the common key generation unit 112 is input to the decryption unit 114 and the encryption unit 110.

The encryption unit 110 encrypts transmission data (data) stored in the storage unit 108 with the common key K, and transmits the data to the IC card 20 via the communication unit 102. On the other hand, in case a ciphertext encrypted by using the common key K is transmitted from the IC card 20, the ciphertext received via the communication unit 102 is input to the decryption unit 114. Then, the decryption unit 114 performs a decryption process on the received ciphertext by using the common key K. Encrypted communication is realized in this manner. Heretofore, the functional configuration of the IC card user terminal 10 has been described. Hereunder, the function configuration of the IC card 20 will be described in detail.

### (1-4: Functional Configuration of IC Card 20)

Next, with reference to FIG. 4, a functional configuration example of the IC card 20 according to the present embodiment will be described. FIG. 4 is an explanatory diagram showing a functional configuration example of the IC card 20 according to the present embodiment. Additionally, the functional configuration example shown in FIG. 4 is for performing the authentication process of FIG. 2, and is appropriately changed depending on the type or the like of the authentication method to be performed.

As shown in FIG. 4, the IC card 20 mainly includes a communication unit 202, a first random number generation unit 204, a storage unit 206, a decryption unit 208, a PIN check unit 210, a random number check unit 212, a second random number generation unit 214, an encryption unit 216, and a common key generation unit 218. Among these structural elements, the main features are the functions of the PIN check unit 210 and the random number check unit 212. Furthermore, the PIN check unit 210 mentioned above is an example of a second determination processing unit. Also, the random number check unit 212 mentioned above is an example of a first determination processing unit. Also, the PIN check unit 210 and the random number check unit 212 that are mentioned above are examples of an authentication determination unit.

First, when a random number request (request) is transmitted from the IC card user terminal 10, the IC card 20 receives the random number request by the communication unit 202. The received random number request is input to the first random number generation unit 204 via the communication unit 202. The first random number generation unit 204 generates a random number r in response to the random number request. Then, the random number r generated by the first random number generation unit 204 is input to the communication unit 202, and also, is stored in the storage unit 206. In addition to the random number r, a PIN of a user and a secret key SK corresponding to a public key PK are stored in the storage unit 206.

When the random number r is input from the first random number generation unit 204 to the communication unit 202, the random number r is transmitted to the IC card user terminal 10 via the communication unit 202. Then, when a ciphertext E(PK, (r, K0, PIN)) generated by using the public key PK is transmitted from the IC card user terminal 10 which has received the random number r, the IC card 20 receives the ciphertext E(PK, (r, K0, PIN)) by the communication unit 202. Then, the ciphertext E(PK, (r, K0, PIN)) is input to the decryption unit 208 from the communication unit 202.

When the ciphertext E(PK, (r, K0, PIN)) is input, the decryption unit 208 reads the secret key SK corresponding to the public key PK from the storage unit 206, decrypts the ciphertext E(PK, (r, K0, PIN)) by using the secret key SK, and acquires the r, the K0 and the PIN. Then, the decryption unit 208 inputs the acquired r to the random number check unit 212, inputs the acquired PIN to the PIN check unit 210, and inputs the acquired K0 to the encryption unit 216.

The PIN check unit 210 checks whether the PIN input from the decryption unit 208 and the PIN read out from the storage unit 206 do not match. When the check result is the non-match of the PINs (output of determination operation="TRUE"), the PIN check unit 210 performs an error process. On the other hand, when the PINs do match (output of determination operation="FALSE"), the PIN check unit 210 notifies the random number check unit 212 of the establishment (ok) of PIN authentication.

When the establishment of the PIN authentication is notified, the random number check unit 212 checks whether the r input from the decryption unit 208 and the r read out from the storage unit 206 match. When the check result is the match of the r's (output of determination operation="TRUE"), the random number check unit 212 inputs to the second random number generation unit 214 a notification indicating that the authentication based on the random number is established (ok). On the other hand, when the r's do not match (output of determination operation="FALSE"), the random number check unit 212 performs an error process.

When the notification indicating that the authentication based on the random number is established is input by the random number check unit 212, the second random number generation unit 214 generates a random number K1. The random number K1 generated by the second random number generation unit 214 is input to the encryption unit 216. When the random number K1 is input, the encryption unit 216 encrypts the random number K1 by using the K0 input from the decryption unit 208. A ciphertext E(K0, K1) is generated by this encryption process. Then, the ciphertext E(K0, K1) generated by the encryption unit 216 is transmitted to the IC card user terminal 10 via the communication unit 202.

Furthermore, the K0 acquired by the decryption unit 208 and the random number K1 generated by the second random number generation unit 214 are input to the common key generation unit 218. The common key generation unit 218 generates a common key K=K0 xor K1 by using the K0 and the K1 that are input. Additionally, it is sufficient that the common key K generated by the common key generation unit 218 is generated based on the random numbers K0 and K1. Thus, an arithmetic expression used for the generation of the common key K is not necessarily limited to the exclusive or operation described above. However, for the sake of explanation, it is to be understood that the common key is generated by the arithmetic expression described above.

The common key K generated by the common key generation unit 218 is input to the encryption unit 216, and also, is stored in the storage unit 206. The encryption unit 216 uses the common key K at the time of encrypting data to be transmitted by the encrypted communication. Also, at the time of decrypting a ciphertext received by the encrypted communication, the decryption unit 208 decrypts the ciphertext by using the common key K stored in the storage unit 206. The encrypted communication is realized in this manner. Heretofore, the functional configuration of the IC card 20 has been described. As described above, the features of the IC card 20 of the present embodiment are the functions of the PIN check unit 210 and the random number check unit 212. Hereunder, explanation will be given in greater detail, focusing on these features.

### (Operation relating to Determination Process)

First, with reference to FIG. 5, the flow of processes by the IC card 20 will be described, focusing on the-processes by the PIN check unit 210 and the random number check unit 212. FIG. 5 is an explanatory diagram showing the flow of processes by the IC card 20.

First, the IC card 20 receives by the communication unit 202 the random number request transmitted from the IC card user terminal 10 (S 142). Then, the IC card 20 generates a random number r by the first random number generation unit 204, and transmits the random number r to the IC card user terminal 10 via the communication unit 202 (S144). Then, the IC card 20 receives a ciphertext E(PK, (r, K0, PIN)) from the IC card user terminal 10, and decrypts the same by the decryption unit 208 (S146). By the process of step S146, r, K0 and PIN are acquired.

Then, the PIN check unit 210 checks whether the acquired PIN and the PIN held in the IC card 20 do not match (S148). When the check result is non-match, the IC card 20 performs an error process (S 152). On the other hand, when it is not non-match, the IC card 20 proceeds to the process of step S 150. It should be noted here that the PIN check unit 210 does not determine "whether it is match," but determines "whether it is non-match." The reason for this configuration will be described later.

When the process proceeds to step S 150, whether the acquired r and the r held in the IC card 20 match or not is checked by the random number check unit 212 (S150). When the check result is non-match, the IC card 20 performs an error process (S152). On the other hand, when it is match, the IC card 20 proceeds to the process of step S154. It should be noted here that the PIN check unit 210 determines "whether it is non-match," while the random number check unit 212 determines "whether it is match."

When the process proceeds to step S 154, the IC card 20 generates a random number K1 by the second random number generation unit 214 (S154). Then, the IC card 20 generates a ciphertext E(K0, K1) by the encryption unit 216, and transmits the same to the IC card user terminal 10 via the communication unit 202 (S 156). Also, the IC card 20 generates a common key K=K0 xor K1 by the common key generation unit 218 (S158).

The processes of steps S 148 and S150 will be described in greater detail. As described above, the process of step S 148 is a determination process of a "non-match check" for the PIN. On the other hand, the process of step S150 is a determination process of a "match check" for the random number r. These processes are actually performed by using an MPU 220 mounted on the IC card 20 as shown in FIGS. 6A and 6B. Additionally, the MPU 220 is an example of a processing circuit.

First, reference will be made to FIG. 6A. FIG. 6A schematically shows the "non-match check" process by the PIN check unit 210. Additionally, in FIG. 6A, the PIN acquired from the IC card user terminal 10 is expresses as PIN', and the PIN held in the IC card 20 is expresses simply as PIN. As shown in FIG. 6A, the MPU 220 is provided with a flags register 222 (FR). Additionally, although expressed as "flags register," in a broader sense, it means a status register indicating the operational status of the MPU 220. Furthermore, the flags register is an example of a register.

Furthermore, a zero flag (ZF) is included in the flags register 222 at a specific bit position. The zero flag is a portion to be set (1 is written) when the operation result is 1 ("TRUE" in determination process). In contrast, when the operation result is 0 ("FALSE" in determination process), the zero flag is cleared (0 is written).

As described above, the PIN check unit 210 determines whether the PIN and the PIN' do not match. In other words, the PIN check unit 210 inputs to the MPU 220 a determination process command (bne A, B) for making the MPU 220 determine whether it is non-match, together with the PIN and the PIN' which are parameters, and refers to the value stored in the zero flag of the flags register 222. Here, "bne A, B" means a process command by which "TRUE" is determined in case the parameters A and B do not match and "FALSE" is determined in case they do match.

When this command is input, the MPU 220 determines whether the PIN and the PIN' do not match, and sets the zero flag of the flags register 222 in case the determination result is "TRUE" and clears the zero flag of the flags register 222 in case the determination result is "FALSE." Accordingly, in case the PIN authentication is to be established, "0" will have been stored in the zero flag of the flags register 222.

Next, reference will be made to FIG. 6B. FIG. 6B schematically shows the "match check" process by the random number check unit 212. Additionally, the r acquired from the IC card user terminal 10 is expressed as r', and the r held in the IC card 20 is expressed simply as r. As described above, the random number check unit 212 determines whether the r and the r' match. In other words, the random number check unit 212 inputs to the MPU 220 a determination process command (beq A, B) for making the MPU 220 determine whether it is match, together with the r and the r' which are parameters, and refers to the value stored in the zero flag of the flags register 222.

Here, "beq A, B" means a process command by which "TRUE" is determined in case the parameters A and B match and "FALSE" is determined in case they do not match. When this command is input to the MPU 220, the MPU 220 determines whether the r and the r' match, and sets the zero flag of the flags register 222 in case the determination result is "TRUE" and clears the zero flag of the flags register 222 in case the determination result is "FALSE." Accordingly, in case the authentication based on the random number r is to be established, "1" will have been stored in the zero flag of the flags register 222.

As is apparent from FIGS. 6A and 6B, the "match check" and the "non-match check" are the same in that two parameters are compared and the match/non-match of the parameters is determined. However, since the operational processes performed by the MPU 220 are different, the values of the zero flags will be different even if the determination results are both "match." The present embodiment proposes a method of enhancing the security by using the characteristic shown in FIGS. 6A and 6B that "the values of the zero flags differ from each other for "the same determination result 'match (or non-match)"'. If the zero flag of the flags register 222 is fixated to "1," both the PIN authentication and the authentication based on the random number will be established according to a general method. However, when using the method of the present embodiment, the PIN authentication will be non-established, and tampering can be prevented. This point will be described in greater detail in the following.

### (1-5: Comparison with Authentication Method in General)

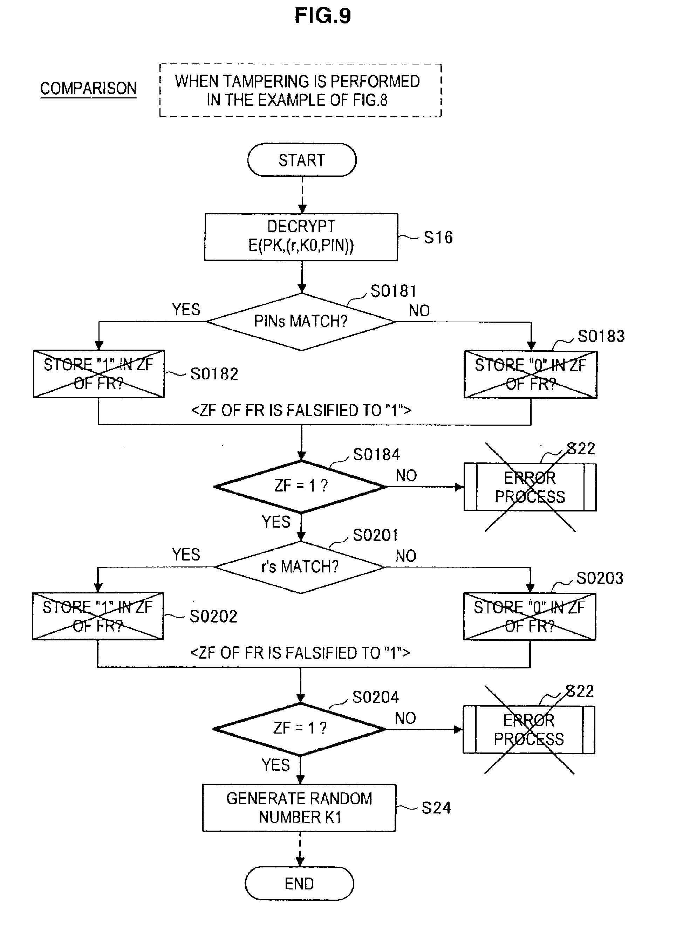

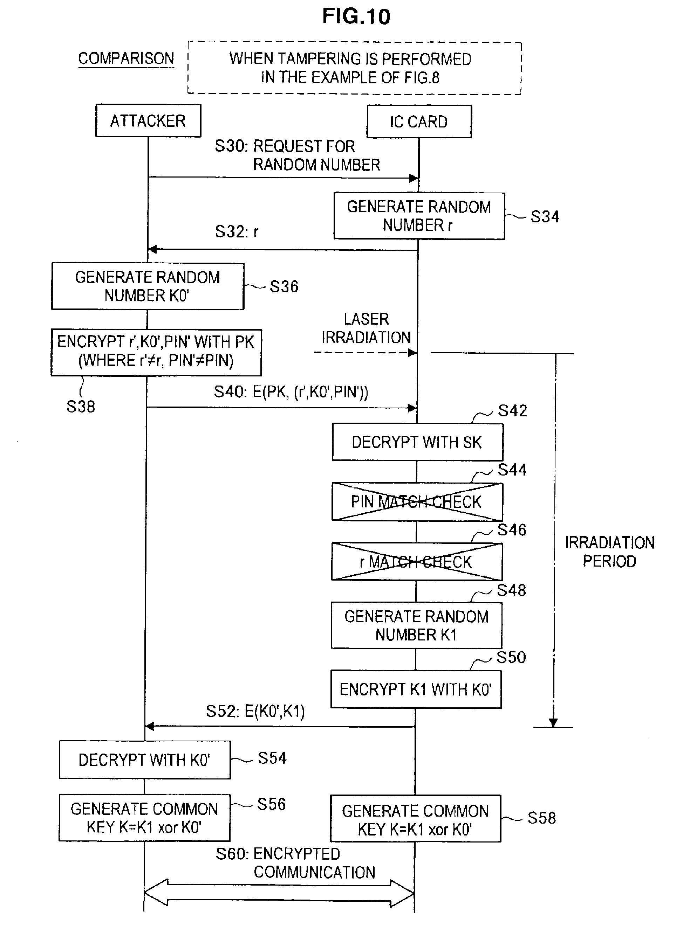

First, with reference to FIG. 7, the flow of operation by the MPU 220 will described, focusing on steps S 146 to S 154 (hereinafter, "step S160") including the parts relating to the PIN authentication and the random number authentication among the authentication processes according to the present embodiment shown in FIG. 5. Then, a flow of operation by the MPU 220 in case of using a general authentication method (FIG. 8) will be described (FIG. 9). Furthermore, a resistance to an attack of fixating the zero flag (FIG. 10) will be described while comparing the general authentication method (FIG. 9) and the method of the present embodiment (FIG. 7).

(Operation of MPU 220 by Authentication Method according to the Present Embodiment)

First, reference will be made to FIG. 7. FIG. 7 shows in detail the processes of steps S 148 and S 150 shown in FIG. 5 in relation to the operation of the MPU 220.

As shown in FIG. 7, when PIN and r are obtained by the process of step S146, the PIN check unit 210 inputs to the MPU 220 the command "bne A, B," the PIN and the PIN'. The MPU 220 determines whether the PIN and the PIN' do not match, according to the input command (S1481). When the determination result is "TRUE (YES)," the MPU 220 stores "1" in the zero flag of the flags register 222 (S1482). On the other hand, when the determination result is "FALSE (NO)," the MPU 220 stores "0" in the zero flag of the flags register 222 (S1483).

Next, the PIN check unit 210 checks whether the zero flag of the flags register 222 is "0" (S1484). When the zero flag is not "0," the IC card 20 performs an error process (S 152). On the other hand, when the zero flag is "0," the IC card 20 proceeds to the process of step S1501. Even if the value of the zero flag is fixated to "1" by a zero flag fixation attack, the attack can be prevented in step S1484.

In case the process proceeds to step S1501, the random number check unit 212 inputs to the MPU 220 the command "beq A, B," the r and the r'. The MPU 220 determines whether the r and the r' match, according to the input command (S1501). When the determination result is "TRUE (YES)," the MPU 220 stores "1" in the zero flag of the flags register 222 (S1502). On the other hand, when the determination result is "FALSE (NO)," the MPU 220 stores "0" in the zero flag of the flags register 222 (S1503).

Next, the random number check unit 212 checks whether the zero flag of the flags register 222 is "1" (S1504). When the zero flag is not "1," the IC card 20 performs an error process (S152). On the other hand, when the zero flag is "1," the IC card 20 proceeds to the process of step S 154. Even if the value of the zero flag is fixated to "0" by a zero flag fixation attack, the attack can be prevented in step S1504.

### (Operation of MPU 220 by General Authentication Method)

Next, with reference to FIGS. 8 and 9, an operation of the MPU 220 by a general authentication method will be described. FIG. 8 is an explanatory diagram showing an overall flow of a general authentication method. Furthermore, FIG. 9 is an explanatory diagram showing a flow of an authentication process, in which the operation of the MPU 220 relating to the PIN authentication and the random number authentication is shown in detail.

First, reference will be made to FIG. 8. First, a random number request is received from the IC card user terminal 10 (S12), and a random number r is generated and transmitted to the IC card user terminal 10 (S 14). Then, a ciphertext E(PK, (r, K0, PIN)) is received from the IC card user terminal 10, and the r and the PIN are acquired (S16). Then, whether the acquired PIN and the PIN which was already held match or not is checked (S 18). In case the check result is match, the process proceeds to step of S20; and in case the check result is non-match, an error process is performed (S22).

In case of proceeding to the process of step S20, whether the acquired r and the r which was already held match or not is checked (S20). In case the check result is match, the process proceeds to step S24; and in case the check result is non-match, an error process is performed (S22). In case of proceeding to the process of S24, a random number K1 is generated (S24), and a ciphertext E(K0, K1) is generated and transmitted to the IC card user terminal 10 (S26). Also, a common key K is generated (S28).

As described above, in a general authentication method, the two determination processes performed in steps S18 and S20 are both "match check." FIG. 9 will be referred to with this in mind.

As shown in FIG. 9, when the PIN and the r are obtained by the process of step S16, the command "beq A, B," the PIN and the PIN' are input to the MPU 220. The MPU 220 determines whether the PIN and the PIN' match, according to the input command (S0181). When the output of the determination operation is "TRUE (YES)," the MPU 220 stores "1" in the zero flag of the flags register 222 (S0182). On the other hand, when the output of the determination operation is "FALSE (NO)," the MPU 220 stores "0" in the zero flag of the flags register 222 (S0183).

Next, whether the zero flag of the flag register 222 is "1" is checked (S0184). In case the zero flag is not "1," an error process is performed (S22). On the other hand, in case the zero flag is "1," the process proceeds to step S0201. If the value of the zero flag is fixated to "1" by a zero flag fixation attack, the determination process of step S0184 is passed, and the attack is not prevented.

When the process proceeds to step S0201, the command "beq A, B," the r and the r' are input to the MPU 220. The MPU 220 determines whether the r and the r' match, according to the input command (S0201). When the output of the determination operation is "TRUE (YES)," the MPU 220 stores "1" in the zero flag of the flags register 222 (S0202). On the other hand, when the output of the determination operation is "FALSE (NO)," the MPU 220 stores "0" in the zero flag of the flags register 222 (S0203).

Next, whether the zero flag of the flags register 222 is "1" is checked (S0204). In case the zero flag is not "1," an error process is performed (S22). On the other hand, in case the zero flag is "1," the process proceeds to step S24. If the value of the zero flag is fixated to "1" by a zero flag fixation attack, the determination process of step S0204 is passed, and the attack is not prevented.

That is, as shown in FIG. 10, the PIN match check (step S44) and the r match check (step S46) are invalidated. Here, an attack fixating the bit value of the zero flag and the influence of the attack on an IC card adopting a general authentication method will be briefly described with reference to FIG. 10.

As shown in FIG. 10, a malicious party first issues a random number request and transmits the same to an IC card (S30). The IC card generates a random number r in response to the received random number request (S34). Then, the IC card transmits the generated random number r to the attacker (S32). Next, the attacker generates a random number K0' (S36). Then, r', K0' and PIN' are encrypted with a public key PK of the IC card, and a ciphertext E(PK, (r', K0', PIN')) is generated (S38). Here, the r' is different from the r generated by the IC card. Also, the PIN' is different from the PIN held in the IC card. Additionally, the r is possibly used instead of the r'.

Then, the attacker transmits the generated ciphertext E(PK, (r', K0', PIN')) to the IC card (S40). However, at this time, the attacker starts laser irradiation on the IC card, and fixates the zero flag of the flags register 222 of the MPU 220 of the IC card to "1." The ciphertext E(PK, (r', K0', PIN')) is received by the IC card and the r', the K0' and the PIN' are decrypted by using a secret key corresponding to the public key PK (S42). Then, the PIN match check (S44) and the r match check (S46) are performed.

However, since the zero flag of the flags register 222 is fixated to "1," the PIN authentication and the r authentication are established despite PIN≠PIN' and r≠r'. That is, the authentication processes of steps S44 and S46 are invalidated. When the authentications of steps S44 and S46 are established, the IC card generates a random number K1 (S48). Then, the IC card encrypts the K1 with the K0' which has been decrypted in step S42, and generates a ciphertext E(K0', K1) (S50).

Then, the IC card transmits the ciphertext E(K0', K1) to the attacker (S52). The attacker, who received the ciphertext E(K0', K1), decrypts the ciphertext E(K0', K1) by using the K0' that the attacker holds, and acquires the K1 (S54). Furthermore, the attacker generates a common key K=K1 xor K0' by using the acquired K1 (S56). Similarly, the IC card generates the common key K=K1 xor K0'. The common key K becomes shared by the attacker and the IC card at this point, and thus, encrypted communication S60 is established by using this common key K. As a result, the attacker can freely falsify the information of the IC card.

As long as a general authentication method is used, this situation is also true for a short-circuiting attack on the output line of the flags register value using the FIB. However, by applying the authentication method according to the present embodiment, errors are output against these attacks, and a state allowing the falsification of the information of the IC card can be prevented.

Additionally, a method might be assumed according to which the attacker switches between the irradiation/non-irradiation of the laser between the PIN authentication and the r authentication. However, such laser irradiation control is technically quite difficult. Also, since no new circuit is added to obtain resistance to the attacks as described above, the application of the technology of the present embodiment does not result in the increase in a circuit scale or a logic complication. Thus, the security can be enhanced without increasing the manufacturing cost and the design burden.

Heretofore, the technology according to the present embodiment has been described in detail while referring to concrete examples. In the above examples, the target to which the technology is to be applied is the IC card 20. However, in case authentication which includes several times of the determination processes is to be performed by the IC card user terminal 10, the technology can also be applied to the IC card user terminal 10. Furthermore, the target to which the technology is to be applied is not limited to an IC card or an IC chip. That is, it can be applied to any means which is equipped with an operation unit having a structure as that of the MPU 220, and which, at the time of performing the several times of the determination processes, inputs a determination operation command to the MPU 220 and performs the determination process by referring to the value output to a specific bit of the flags register 222. Thus, it can be applied to a PC, a mobile terminal, a mobile phone, an IC chip, a reader/writer, and various types of electronic devices and the like which include the means as described.

### <2: Conclusion>

The technology according to the present embodiment is applied to an authentication device for performing several times of authentication processes. For example, it can be applied to an IC card or the like which performs an authentication using a personal identification number PIN of a user and a key sharing using a random number r. By applying this configuration, an unauthorized user can be excluded, and an impersonation attack using the past data can be prevented. However, if the flags register value of the MPU which actually performs the determination process to be performed at the time of the authentication process is fixated to "1" or "0," a difficult situation arises that either authentication is established in an unauthorized way.

To meet this difficult situation, the present embodiment proposes a method of implementing alternately or randomly a part which performs the authentication establishment process in case the conditional expression is "TRUE" and a part which performs the authentication establishment process in case it is "FALSE." By applying such implementation method, a process according to which the authentication is established in case the value of the flags register is "0" and a process according to which the authentication is established in case the value is "1" are implemented. As a result, even if the value of the flags register is fixated, an attacker can be prevented from performing an unauthorized authentication establishment process.

It should be understood by those skilled in the art that various modifications, combinations, sub-combinations and alterations may occur depending on design requirements and other factors insofar as they are within the scope of the appended claims or the equivalents thereof.

For example, in the explanation relating to the above-described embodiment, a method of applying the technology of the present embodiment to a mutual authentication with an external device has been mainly described to simplify the explanation. However, the technology according to the present embodiment can be applied to various authentication processes performed within an IC card or the like which is an example of the authentication device. For example, it can be applied to program authentication performed within the IC card or the like. Application programs for providing various services are loaded on the IC card or the like. Also, firmware which is executed at the time of startup and which is for building an execution environment for an application program or the like is loaded on the IC card or the like.

These firmware and application programs are used to read various types of information stored in the IC card or the like and to write information on the IC card or the like. Thus, the falsification of these firmware and application programs has to be firmly prevented. In many cases, program authentication is performed within the IC card of the like to prevent the falsification of the firmware and application programs. However, when a tampering attack such as the laser irradiation or the like is made, the authentication process performed within the IC card or the like is invalidated. Thus, it becomes important to apply the technology of the present embodiment to the authentication process for the firmware and application programs and to increase the tamper resistance.

For example, the authentication process of the application program which is an execution target and the authentication process of the firmware used to build the execution environment for the application program are performed in a row, and at this time, the technology of the present embodiment is used. By using this method, execution of an unauthorized application program while the program authentication is invalidated by the tampering attack such as laser irradiation can be effectively prevented. As described, the technology according to the present embodiment produces a great effect not only upon an authentication process mutually performed with an external device, but also upon an authentication process performed within a device.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

The present application contains subject matter related to that disclosed in Japanese Priority Patent Application JP 2009-96196 filed in the Japan Patent Office on April 10, 2009, the entire content of which is hereby incorporated by reference.

## Claims

1. An authentication device comprising:
a register in which a first bit value or a second bit value different from the first bit value is stored;
m (1≤m≤N-1, N≥2) first determination processing units for determining whether input information and authentication information corresponding to the input information match, and for storing the first bit value in the register if a result of the determination is TRUE and for storing the second bit value in the register if FALSE;
(N-m) second determination processing units for determining whether input information and authentication information corresponding to the input information do not match, and for storing the first bit value in the register if a result of the determination is TRUE and for storing the second bit value in the register if FALSE; and
an authentication determination unit for determining that an authentication is established, in case the first bit value is stored in the register by a determination process by every first determination processing unit and the second bit value is stored in the register by a determination process by every second determination processing unit.

2. The authentication device according to claim 1, comprising:
a processing circuit for storing in the register, in case an execution command for a determination process and input data relating to the execution command are input, the first bit value if a result of executing the execution command by using the input data is TRUE and the second bit value if FALSE;
wherein the first determination processing units store the first or the second bit value in the register by inputting to the processing circuit an execution command for a match determination process for two pieces of input data along with inputting, as the input data, the input information and authentication information corresponding to the input information, and
wherein the second determination processing units store the first or the second bit value in the register by inputting to the processing circuit an execution command for a non-match determination process for two pieces of input data along with inputting, as the input data, the input information and authentication information corresponding to the input information.

3. The authentication device according to claim 1, further comprising:
a storage unit in which first authentication information to be used for authenticating a first program for building an execution environment for an application program and second authentication information to be used for authenticating the application program are stored;
- wherein the first determination processing units determine whether information for authentication obtained as the input information from the first program which is an execution target and the first authentication information stored in the storage unit match, and store the first or the second bit value in the register, and
wherein the second determination processing units determine whether information for authentication obtained as the input information from the second program which is an execution target and the second authentication information stored in the storage unit do not match, and store the first or the second bit value in the register.

4. The authentication device according to claim 2, further comprising:
a storage unit in which first authentication information to be used for authenticating a first program for building an execution environment for an application program and second authentication information to be used for authenticating the application program are stored;
wherein the first determination processing units determine whether information for authentication obtained as the input information from the first program which is an execution target and the first authentication information stored in the storage unit match, and store the first or the second bit value in the register, and
wherein the second determination processing units determine whether information for authentication obtained as the input information from the second program which is an execution target and the second authentication information stored in the storage unit do not match, and store the first or the second bit value in the register.

5. The authentication device according to claim 1, further comprising:
a storage unit in which first authentication information to be used for authenticating a first program for building an execution environment for an application program and second authentication information to be used for authenticating the application program are stored;
wherein the second determination processing units determine whether information for authentication obtained as the input information from the first program which is an execution target and the first authentication information stored in the storage unit do not match, and store the first or the second bit value in the register, and
wherein the first determination processing units determine whether information for authentication obtained as the input information from the second program which is an execution target and the second authentication information stored in the storage unit match, and store the first or the second bit value in the register.

6. The authentication device according to claim 2, further comprising:
a storage unit in which first authentication information to be used for authenticating a first program for building an execution environment for an application program and second authentication information to be used for authenticating the application program are stored;
wherein the second determination processing units determine whether information for authentication obtained as the input information from the first program which is an execution target and the first authentication information stored in the storage unit do not match, and store the first or the second bit value in the register, and
wherein the first determination processing units determine whether information for authentication obtained as the input information from the second program which is an execution target and the second authentication information stored in the storage unit match, and store the first or the second bit value in the register.

7. The authentication device according to claim 1, further comprising:
a storage unit in which first authentication information to be used for an authentication process between the authentication device and an external device and second authentication information to be used for user authentication via the external device are stored;
wherein the first determination processing units determine whether input information input from the external device and the first authentication information stored in the storage unit match, and store the first or the second bit value in the register, and
wherein the second determination processing units determine whether input information input by a user via the external device and the second authentication information stored in the storage unit do not match, and store the first or the second bit value in the register.

8. The authentication device according to claim 2, further comprising:
a storage unit in which first authentication information to be used for an authentication process between the authentication device and an external device and second authentication information to be used for user authentication via the external device are stored;
wherein the first determination processing units determine whether input information input from the external device and the first authentication information stored in the storage unit match, and store the first or the second bit value in the register, and
wherein the second determination processing units determine whether input information input by a user via the external device and the second authentication information stored in the storage unit do not match, and store the first or the second bit value in the register.

9. The authentication device according to claim 1, further comprising:
a storage unit in which first authentication information to be used for an authentication process between the authentication device and an external device and second authentication information to be used for user authentication via the external device are stored;
wherein the first determination processing units determine whether input information input by a user via the external device and the second authentication information stored in the storage unit match, and store the first or the second bit value in the register, and
wherein the second determination processing units determine whether input information input from the external device and the first authentication information stored in the storage unit do not match, and store the first or the second bit value in the register.

10. The authentication device according to claim 2, further comprising:
a storage unit in which first authentication information to be used for an authentication process between the authentication device and an external device and second authentication information to be used for user authentication via the external device are stored;
wherein the first determination processing units determine whether input information input by a user via the external device and the second authentication information stored in the storage unit match, and store the first or the second bit value in the register, and
wherein the second determination processing units determine whether input information input from the external device and the first authentication information stored in the storage unit do not match, and store the first or the second bit value in the register.

11. An authentication method comprising the steps of:
determining whether input information and authentication information corresponding to the input information match, and executing m times (1≤m≤N-1, N≥2) a first determination processing step of storing, in a register in which a first bit value or a second bit value different from the first bit value is to be stored, the first bit value if a result of the determination is TRUE and storing in the register the second bit value if FALSE;
determining whether input information and authentication information corresponding to the input information do not match, and executing (N-m) times a second determination processing step of storing in the register the first bit value if a result of the determination is TRUE and storing in the register the second bit value if FALSE; and
determining that an authentication is established, in case the first bit value is stored in the register by a determination process of every first determination processing step and the second bit value is stored in the register by a determination process of every second determination processing step.

12. A program for causing a computer to realize the steps of:
determining whether input information and authentication information corresponding to the input information match, and executing m times (1≤m≤N-1, N≥2) a first determination processing step of storing, in a register in which a first bit value or a second bit value different from the first bit value is to be stored, the first bit value if a result of the determination is TRUE and storing in the register the second bit value if FALSE;
determining whether input information and authentication information corresponding to the input information do not match, and executing (N-m) times a second determination processing step of storing in the register the first bit value if a result of the determination is TRUE and storing in the register the second bit value if FALSE; and
determining that an authentication is established, in case the first bit value is stored in the register by a determination process of every first determination processing step and the second bit value is stored in the register by a determination process of every second determination processing step.
